(19) **Europäisches Patentamt / European Patent Office / Office européen des brevets**

(11) **EP 3 606 189 A1**

(12) **EUROPEAN PATENT APPLICATION**
published in accordance with Art. 153(4) EPC

(43) Date of publication:
**05.02.2020 Bulletin 2020/06**

(21) Application number: **18805227.8**

(22) Date of filing: **23.05.2018**

(51) Int Cl.:
**H04W 52/24** (2009.01)  **H04W 52/34** (2009.01)
**H04W 52/38** (2009.01)

(86) International application number:
**PCT/KR2018/005847**

(87) International publication number:
**WO 2018/217012 (29.11.2018 Gazette 2018/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.05.2017  KR 20170063113**

(71) Applicant: Samsung Electronics Co., Ltd.
Suwon-si, Gyeonggi-do 16677 (KR)

(72) Inventors:
• **KIM, Bongchan**
Suwon-si,
Gyeonggi-do 16677 (KR)
• **YI, Byoungha**
Suwon-si,
Gyeonggi-do 16677 (KR)
• **HUH, Hoon**
Suwon-si,
Gyeonggi-do 16677 (KR)
• **LEE, Jaeyoung**
Suwon-si,
Gyeonggi-do 16677 (KR)

(74) Representative: **Gulde & Partner
Patent- und Rechtsanwaltskanzlei mbB**
Wallstraße 58/59
10179 Berlin (DE)

(54) **METHOD AND APPARATUS FOR ADJUSTING TRANSMIT POWER OF CELL IN MULTI-CARRIER SYSTEM**

(57) The present invention relates to a method and an apparatus for real-time transmit power control of a base station and, more particularly, to a method and an apparatus for adjusting real-time transmit power of each cell for improving UE throughput in a multi-carrier environment. A method of controlling transmit power of each cell by a server of the present invention comprises the steps of: receiving setting information from a system management server; receiving channel state information and loading-related information from a base station controlling each cell; determining transmit power to be applied to each cell on the basis of the setting information, the channel state information, and the loading-related information; and transmitting the determined transmit power information to the base station controlling each cell.

FIG. 3

**Description**

**[Technical Field]**

The disclosure relates to a method and an apparatus for controlling transmission power of a cell in real time and, more particularly, to a method and an apparatus for adjusting transmission power of each cell in real time in order to improve UE throughput in a multi-carrier environment.

**[Background Art]**

The conventional technologies for controlling transmission power include a technology for controlling transmission power of a cell in real time to be suitable for a radio channel and a loading state in order to improve UE throughput, but the corresponding technology does not consider the operation of a base station and a UE within a multi-carrier and Carrier Aggregation (CA) system and does not separate cell types such as a macro or a pico. Further, the corresponding technology has a problem in that a coverage hole by the control of transmission power cannot be resolved.

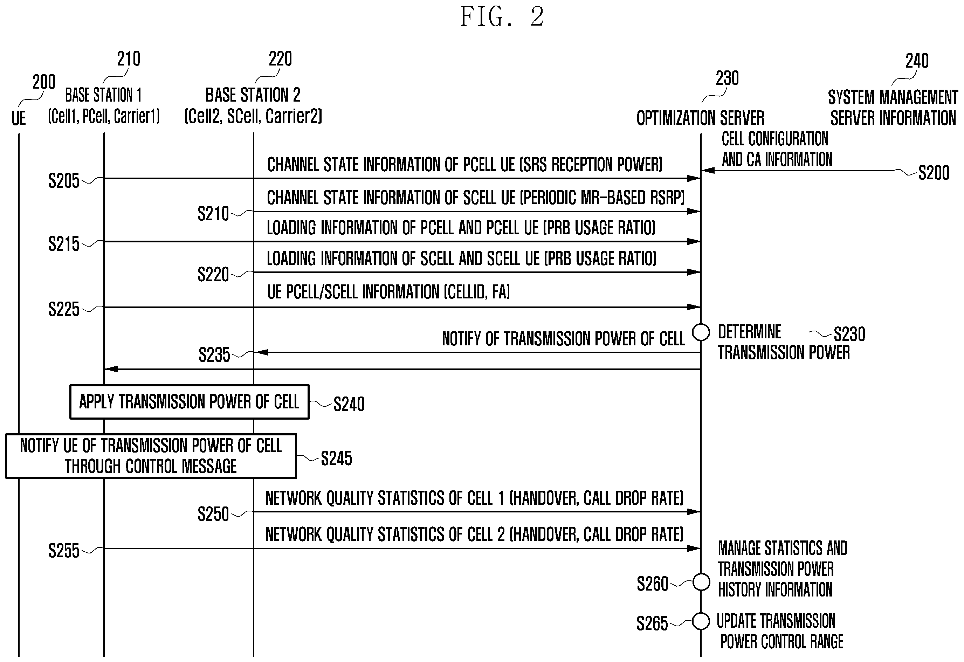

Accordingly, throughput of the UE can be improved through optimization of integrated transmission power between carriers in a multi-carrier environment. For example, UE throughput can be improved by generating coverage mismatch between carriers (referring to cell area mismatch between carriers) through the control of transmission power and transmitting data to the UE through a carrier having a good radio channel state through distribution of resources based on Proportional Fair (PF) scheduling. Further, in a heterogeneous network (HetNet) environment in which a macro cell and a pico cell coexist as illustrated in FIG. 2, UE throughput can be improved by controlling transmission power in consideration of interference from the pico cell to the macro cell (pico-to-macro interference) and off-loading from the macro cell to the pico cell (macro-to-pico off-loading) according to loading states of the macro cell and the pico cell.

**[Disclosure of Invention]**

**[Technical Problem]**

Accordingly, there is a need of a method of controlling transmission power of a base station in consideration of multi-carrier information such as a radio channel for each carrier and loading-related information, a CA operation, and each cell type in a multi-carrier environment.

**[Solution to Problem]**

In accordance with an aspect of the disclosure, a method of controlling transmission power of each cell by a server is provided. The method includes: receiving configuration information from a system management server; receiving channel state information and loading-related information from a base station controlling each cell; determining transmission power to be applied to each cell, based on the configuration information, the channel state information, and the loading-related information; and transmitting the determined transmission power information to the base station for controlling each cell.

In accordance with another aspect of the disclosure, a server for controlling transmission power of each cell is provided. The server includes: a transceiver configured to transmit and receive a signal to and from a base station for controlling each cell and a system management server; and a controller configured to perform control to receive configuration information from the system management server, receive channel state information and loading-related information from the base station for controlling each cell, determine transmission power to be applied to each cell, based on the configuration information, the channel state information, and the loading-related information, and transmit the determined transmission power information to the base station for controlling each cell.

**[Advantageous Effects of Invention]**

The disclosure describes a method of controlling transmission power of a cell in real time in order to improve UE throughput in a multi-carrier environment. The disclosure includes a method of detecting network quality deterioration by the control of transmission power through network quality monitoring based on network statistics and updating a transmission power control range. Further, the disclosure includes a method of updating a transmission power control range to prevent an SINR from being equal to or smaller than an SINR that causes a communication outage by predicting a signal-to-interference-noise ratio (SINR) according to a change in transmission power. Further, the disclosure describes an apparatus capable of performing the method.

According to the disclosure, it is possible to improve UE throughput by controlling transmission power of a cell in real time in consideration of multi-carrier information such as a radio channel for each carrier, loading-related information, a CA operation, and each cell type without deterioration of a network quality in a multi-carrier environment.

**[Brief Description of Drawings]**

FIG. 1 illustrates a heterogeneous network environment;
FIG. 2 illustrates a procedure of the disclosure;
FIG. 3 illustrates the configuration of the disclosure in a heterogeneous network system;
FIG. 4 illustrates steps of the disclosure;
FIG. 5 illustrates an effect according to determination of transmission power of the disclosure in a heterogeneous network environment;
FIG. 6 illustrates a detailed process of determining transmission power according to the disclosure;
FIG. 7 illustrates a detailed example of determining transmission power for compulsory load balancing;
FIG. 8 illustrates a method by which an optimization server updates a transmission power control range by monitoring a network quality;
FIG. 9 is a block diagram illustrating an optimization server capable of performing the disclosure;
FIG. 10 is a block diagram illustrating a UE capable of performing the disclosure; and
FIG. 11 is a block diagram illustrating a base station capable of performing the disclosure.

**[Mode for the Invention]**

Hereinafter, embodiments of the disclosure will be described in detail in conjunction with the accompanying drawings. In the following description of the disclosure, a detailed description of known functions or configurations incorporated herein will be omitted when it may make the subject matter of the disclosure rather unclear. The terms which will be described below are terms defined in consideration of the functions in the disclosure, and may be different according to users, intentions of the users, or customs. Therefore, the definitions of the terms should be made based on the contents throughout the specification.

In addition, in describing the embodiments of the disclosure, a main substance of the disclosure may be applied to even other communication systems that have a similar technical background with a little change in a range that is not largely out of the range of the disclosure, and this may be possible by a determination of a person having a skilled technical knowledge in a technical field of the disclosure.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Here, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, "unit" or divided into a larger number of elements, "unit". Moreover, the elements and "units" may be implemented to reproduce one or more CPUs within a device or a security multimedia card.

The disclosure describes a method and an apparatus for controlling transmission power of a cell in real time in consideration of multi-carrier information such as radio channel and loading-related information for each carrier, a CA operation, and a type of each cell in a multi-carrier environment.

A network according to the disclosure includes a system management server, a base station for controlling a cell (the base station may control a macro cell and/or a pico cell), and an optimization server. The system management server transfers configuration information of all cells managed by the optimization server to the optimization server. The base station collects required information for a period of a transmission power control algorithm and transfers the collected information to the optimization server. The optimization server determines transmission power of a cell for improving UE throughput on the basis of information collected from the base station and provides the same to the base station again.

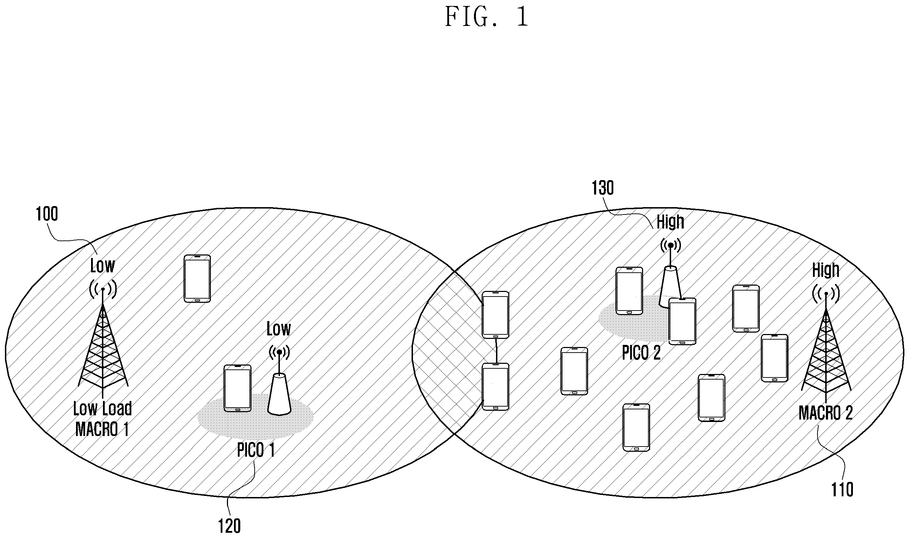

FIG. 1 illustrates a heterogeneous network environment to which the disclosure is applied. Referring to FIG. 1, pico cell #1 120 is located within the coverage of macro cell #1 100, and pico cell #2 130 is located within the coverage of macro cell #2 110. In this case, as described above, it is required to optimize the control of transmission power of the base station in order to increase UE throughput.

FIG. 2 illustrates a procedure according to the disclosure.

Referring to FIG. 2, it is assumed that a UE 200 is a UE supporting CA, cell #1 is a primary cell (PCell) of the UE, and cell #2 is a secondary cell (SCell) of the UE. At this time, a base station 210 for controlling cell #1 and a base station 220 for controlling cell 2 are located in a network. Further, it is assumed that cell 1 uses carrier 1 and cell 2 uses carrier 2. In the CA operation, the UE receives data on the PCell (cell 1 or carrier 1) and the SCell (cell 2 or carrier 2). The UE is a PCell UE on the side of the PCell and is an SCell UE on the side of the SCell. An optimization server 230 and a system management server 240 are located in the network. Names of such network entities may be different, and respective entities may be located at physically the same location or different locations, but if a network entity performs the following function, the network entity may be understood as the network entity of the disclosure.

A procedure of controlling transmission power of each cell is described below.

The system management server 240 transfers configuration information of all cells managed by the optimization server 230 (for example, a transmission power control range, a transmission power control period, neighbor cell information, a PCell change (change condition), and cell type information) and CA-related information (for example, a collocated cell and SCell addition (add), release, change, activation, and deactivation condition information) to the optimization server 230 in S200. Thereafter, base station #1 210 for controlling cell 1 (PCell or carrier 1) and a base station for controlling a neighbor cell having the same carrier as cell 1 collect radio channel information for the PCell UE (which may be derived from SRS reception power of the base station) through measurement of a sound reference signal (SRS) from the UE and transfer the radio channel information to the optimization server 330 in S205. Although the base station detects a radio channel state through the SRS which the UE transmits in S205, the base station may detect a radio channel state through another reference signal other than the SRS, a pilot signal, or channel status information which the UE transmits and transfer the radio channel state to the optimization server 230. Base station #2 220 for controlling cell 2 (SCell or carrier 2) collects radio channel information for the SCell UE (for example, reference signal received power (RSRP)) through a periodic measurement report (MR) which the UE transmits and transfers the radio channel information to the optimization server in S210.

Thereafter, base station #1 210 collects loading-related information of the PCell and the PCell UE (for example, a usage ratio of physical resource blocks (PRBs) for a transmission power control period and transfers the loading-related information to the optimization server 230 in S215. Base station #2 220 also collects loading-related information of the SCell and the SCell UE (for example, a usage ratio of PRBs) for a transmission power control period and transfers the loading-related information to the server 230 in S220.

Base station #1 210 transfers information related to the PCell and the SCell of the UE (for example, cell IDs of the PCell and the SCell, and frequency assignment (FA)) to the optimization server 230 in every transmission power control period in S225.

The optimization server 230 determines transmission power of each cell in every transmission power control period on the basis of various channel states collected from base station #1 210 and base station #2 220, loading-related information, CA-related information, cell configuration information, and the cell type in S230. Thereafter, the optimization server transfers the determined transmission power information to base station #1 210 and base station #2 220 in S235.

Base station #1 210 and base station #2 220 receiving the transmission power information applies the corresponding transmission power to cell 1 and cell 2 in S240. Further, base station #1 210 and base station #2 220 transfers the transmission power applied to cell 1 and cell 2 to the UE through a control message in S245. Thereafter, S205 to S245 are repeatedly performed.

The network entities perform the following network quality monitoring procedure in order to prevent deterioration of network quality according to the control of transmission power.

Base station #1 210 collects network quality statistics (for example, handover (HO)-related statistics and call drop statistics) for a transmission power control period and transfers the network quality statistics to the optimization server 230 in S250. Base station #2 220 also collects network quality statistics for a transmission power control period and transfers the network quality statistics to the optimization server 330 in S255. Thereafter, the optimization server 230 manages network quality statistics and history information of transmission power in S260, identifies network quality on the basis of the network quality statistic information, and updates a transmission power control range of the base station of the cell in which the network quality deteriorates in S265. S250 to S265 are repeatedly performed.

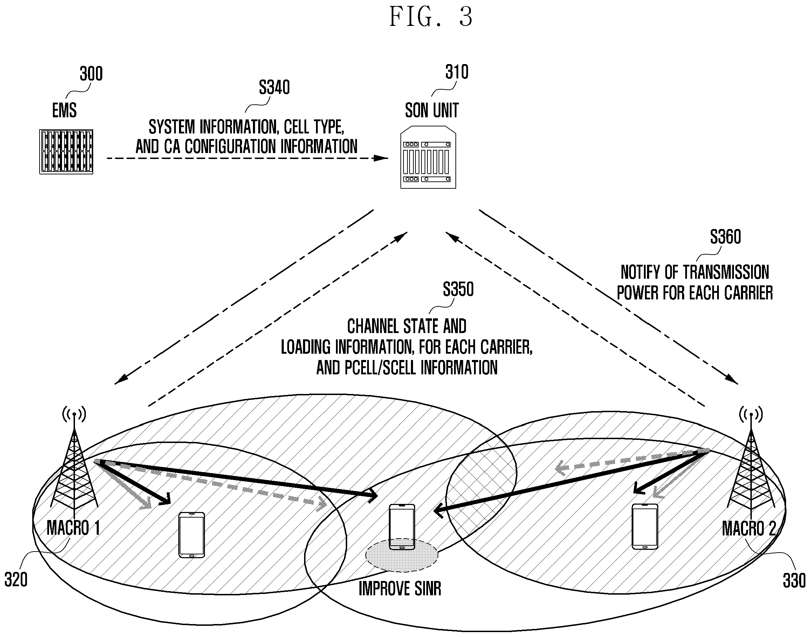

FIG. 3 illustrates the configuration of the disclosure in a heterogeneous network system.

Referring to FIG. 3, an EMS 300 transmits system information, cell type information, and CA configuration information to a SON unit 310 in S340. A base station 320 or 330 for controlling each cell transmits a radio channel state for each carrier, loading-related information for each carrier, and PCell and SCell information to the SON unit 310 in S350. The SON unit 310 determines transmission power to be applied to a cell controlled by each base station on the basis of the received information and provides the transmission power to each base station in S360. At this time, the EMS of FIG. 3 may be understood as the system management server of FIG. 2, and the SON unit of FIG. 3 may be understood as the optimization server of FIG. 2.

Hereinafter, the procedure of the disclosure illustrated in FIGs. 2 and 3 will be described in more detail.

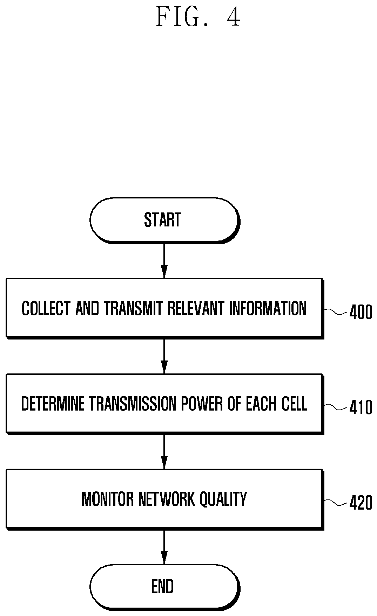

FIG. 4 illustrates steps of the disclosure. Referring to FIG. 4, the disclosure largely includes three steps.

- Collect and transmit relevant information in step 400
- Determine transmission power of each cell in step 410
- Monitor network quality in step 420

Hereinafter, a process of collecting and transmitting information will be described.

The system management server stores configuration information of a cell and transfers configuration information of all cells managed by the optimization server to the optimization server. The cell configuration information is described below.

- Transmission power control range: minimum transmission power ~ maximum transmission power
- Transmission power control period
- Cell ID of neighbor cell
- PCell change condition: PCell handover condition (for example, Event A3 indicating that a status of a neighbor cell is better than a serving cell by a predetermined offset
- Cell type: cell type = macro cell if cell type is macro and cell type = cell if cell type is pico

Further, the system management server stores CA-related information of the cell. The system management server transfers CA-related information of all cells managed by the optimization server to the optimization server. The CA-related information of the cell is described below.

- Collocated cell-related information: collocated cell is a cell having the same or a similar coverage area while using a carrier different from that of the corresponding cell
- SCell addition condition (for example, Event A4 indicating that a status of a neighbor cell is better than a specific threshold value)
- SCell release condition (for example, Event A2 indicating that a serving cell is worse than a specific threshold value)
- SCell change condition (for example, Event A6 indicating that a status of a neighbor cell is better than a current SCell by an offset)
- SCell activation condition
- SCell deactivation condition

The base station for controlling each cell collects channel status information, loading-related information, and CA-related information and transfers the collected information to the optimization server. A detailed procedure for collecting and transmitting information is described below.

A procedure for collecting and transmitting channel status information of the PCell UE is described below.

- The base station for controlling the PCell (cell 1 or carrier 1) and base stations for controlling neighbor cells having the same carrier as the PCell measure the SRS of the PCell UE and transfers the SRS to the optimization server.
- The optimization server stores radio channel state information between the PCell UE and the PCell and a neighboring cell having a carrier which is the same as that of the PCell on the basis of collected information (SRS reception power).
- The PCell UE may transmit an SRS, another reference signal, or a pilot signal to the base station and also transmit channel state information which the PCell UE measures to the base station.

A procedure for collecting channel state information of the SCell UE is described below.

- The base station for controlling the SCell (cell 2 or carrier 2) collects RSRP values of the SCell and a neighboring cell having a carrier which is the same as that of the SCell through a periodic measurement report and transfers the collected RSRP values to the optimization server.
- The optimization server stores radio channel state information between the SCell UE and the SCell and a neighboring cell having a carrier which is the same as that of the SCell on the basis of collected information (RSRP).

A procedure for collecting loading-related information of the PCell and the PCell UE is described below.

- The base station for controlling the PCell calculates a PRB usage ratio of the PCell during a transmission power control period.
- The base station for controlling the PCell calculates a PRB usage ratio of the PCell UE during a transmission power control period.
- The base station for controlling the PCell transfers PRB usage ratios of the PCell and the PCell UE to the optimization server in every transmission power control period.
- The optimization server stores PRB usage ratios of the PCell and the PCell UE.

A procedure of collecting and transmitting loading information of the SCell and the SCell UE is described below.

- The base station for controlling the SCell calculates a PRB usage ratio of the SCell during a transmission power control period.
- The base station for controlling the SCell calculates a PRB usage ratio of the SCell UE during a transmission power control period.
- The base station for controlling the SCell transfers PRB usage ratios of the SCell and the SCell UE to the optimization server in every transmission power control period.
- The optimization server stores PRB usage ratios of the SCell and the SCell UE.

A procedure of collecting and transmitting UE PCell and SCell information is described below.

- The base station for controlling the PCell transfers UE PCell and SCell information (cell identifier and FA) to the optimization server in every transmission power control period.
- The optimization server stores UE PCell and SCell information.

A procedure for collecting network quality statistics of the cell is described below.

- The base station for controlling the cell collects HO-related statistics of the corresponding cell (the number of attempts of HO and the number of successes of HO) during a transmission power control period, call drop-related statistics (the number of successes of connection configuration, the number of successes of hand-in (meaning access to a cell through handover from another cell), and the number of call drops).
- The base station for controlling the cell transfers HO statistics and call drop-related statistics to the optimization server in every transmission power control period.
- The optimization server manages HO-related statistics of the cell, call drop-related statistics, and history information of transmission power. However, the history information maintains only information for a recent specific time.

Hereinafter, a transmission power determination process to be applied to each base station will be described.
The optimization server determines transmission power to be applied to all cells managed by the optimization server on the basis of multi-carrier information (radio channel state for each carrier, loading-related information, CA-related information, and cell type information) collected from each base station. The optimization server determines transmission power to be applied to each cell to optimize a target value described below while acquiring a load-balancing effect between cells during a transmission power determination process in an aspect of a PRB usage ratio or the number of UEs.

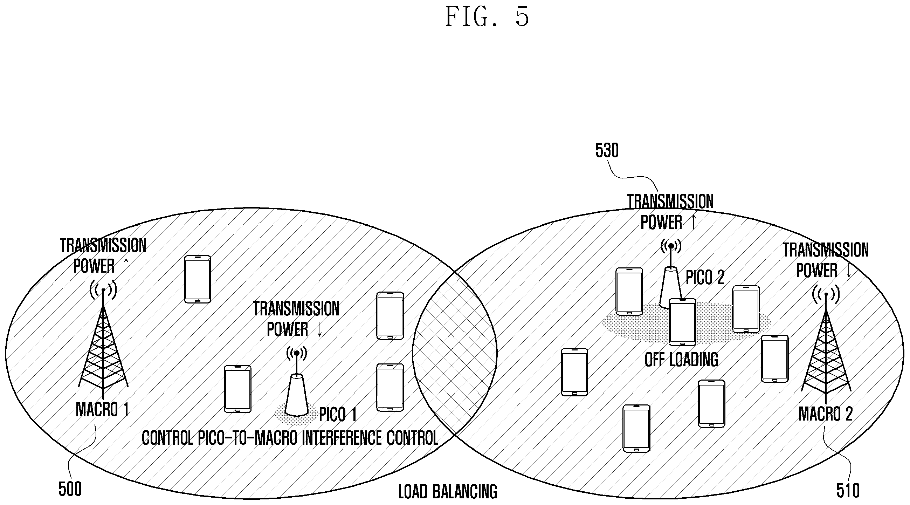

FIG. 5 illustrates an effect according to determination of transmission power of the disclosure in a heterogeneous network environment.

Referring to FIG. 5, power applied to macro cell #1 500 having relatively small load (that is, having the small number of UEs receiving a service) increases and power applied to macro cell #2 510 having relatively large load (that is, having the large number of UEs receiving a service) decreases on the basis of the power control result. Accordingly, load balancing between macro cells is possible, and at this time power of pico cell #1 520 located within the coverage of macro cell #1 decreases to reduce pico-to-macro interference influencing macro cell #1. Further, power of pico cell #2 530 located within the coverage of macro cell #2 increases for macro-to-pico offloading.

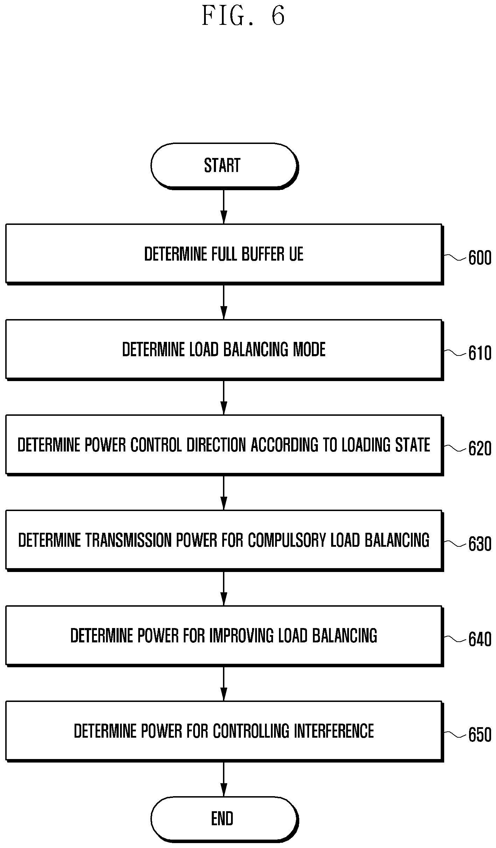

FIG. 6 illustrates a detailed process of determining transmission power according to the disclosure. Referring to FIG. 6, the process of determining transmission power is described below.

Determine a full buffer UE in step 600.

Determine a load-balancing mode in step 610.

Determine a power control direction according to a loading state in step 620.

Determine transmission power for compulsory load balancing in step 630.

Determine power for improving load balancing in step 640.

Determine power for controlling interference in step 650.

Each step of the process of determining transmission power will be described below in detail.

1. Determine a full buffer UE.

The optimization server identifies whether the UE is a full buffer UE on the basis of a PRB usage ratio of the cell at the current transmission power (CurrP), a PRB usage ratio of the UE, and capacity information. The full buffer UE is a UE having a large amount of data to be transmitted, and a UE which satisfies all of Equations (1), (2), and (3) below is determined as the full buffer UE.

Equation (1)

$$CellPRBusageRatio_{CurrP, J_{CurrP,m}} \geq Threshold_{HighLoadCell}$$

In Equation (1) above, $CellPRBusageRatio_{CurrP j_{CurrP,m}}$ denotes a cell PRB usage ratio of a serving cell of a UE m at current transmission power (CurrP), and $j_{CurrP,m}$ denotes a serving cell index of the UE m (that is, index of a PCell or SCell of the UE m) at current transmission power (CurrP). $Threshold_{HighLoadCell}$ is a predetermined value and corresponds to a reference of the cell PRB usage ratio of the serving cell of the UE m at the current transmission power. If the cell PRB usage ratio of the serving cell of the UE m at the current transmission power is higher than $Threshold_{HighLoadCell}$, the cell may be determined as a cell of high load.

Equation (2)

$$UEPRBusageRatio_{CurrP j_{CurrP,m},m} > 1/N_{CurrP j_{CurrP,m}}$$

In Equation (2) above, $CellPRBusageRatio_{CurrP \cdot j_{CurrP,m},m}$ denotes a UE PRB usage ratio of the UE m at the current transmission power (CurrP), and $N_{CurrP,j_{CurrP,m}}$ denotes the number of UEs of the serving cell of the UE m at the current transmission power (CurrP). That is, Equation (2) above means the case in which the PRB usage ratio of the UE m is higher than an average PRB usage ratio of the UE expected in the serving cell $j_{CurrP, m}$ of the UE m.

Equation (3)

$$UEPRBusageRatio_{CurrP j_{CurrP,m},m} > FullBufferRatio_{CurrP j_{CurrP,m},m}$$

*FullBufferRatio*$_{CurrP,jCurrP,m,m}$ denotes a predicted PRB usage rate of the UE m when a cell PRB usage rate of the serving cell of the UE m at current transmission power (CurrP) is 1 and data transmission rates of all UEs within the serving cell of the UE m are the same as each other, and *UEPRBusageRatio*$_{CurrP,jcurrP,m,m}$ denotes a UE PRB usage rate of the UE m at current transmission power (CurrP). That is, Equation (3) means the case in which a PRB usage ratio of the UE m is larger than a predicted PRB usage ratio of the UE m when a cell PRB usage ratio of the serving cell j$_{CurrP, m}$ is 1.

2. Determine a load-balancing mode

The determination of the load-balancing mode is performed as follows. The optimization server selects a balancing mode of a number of UEs if a PRB usage ratio of all cells managed by the optimization server is larger than or equal to a specific threshold value. Otherwise, the optimization server selects a PRB balancing mode. If the PRB usage ratio of all cells is larger than or equal to the specific threshold value, many transmission resources (PRBs) have been already used and thus UE throughput is increased through the number-of-UE balancing. Otherwise, many transmission resources are not being used and thus UE throughput is increased through the balanced use of transmission resources.

3. Determine a power control direction according to a loading state

The optimization server determines a power control direction according to a load state of a macro cell within the optimization server. The optimization server decreases power (power down) in order to decrease a load of a macro cell in a high load state, and increases power (power up) in order to increase a load of a macro cell in a low load state. A detailed procedure is described below.
The optimization server calculates a load degree of a macro cell according to Equation (4) below.

Equation (4)

$$LoadDegree = (CellLoad_{Macro,j} - AvgOfCellLoad_{Macro}) / StdOfCellLoad_{Macro}$$

In Equation (4), CellLoad$_{Macro,j}$ denotes the number of UEs (in the UE balancing mode) of a macro cell j or a PRB usage ratio (in the PRB balancing mode), AvgOfCellLoad$_{Macro}$ denotes an average value of CellLoad$_{Macro}$ of a macro cell within the optimization server, and StdOfCellLoad$_{Macro}$ denotes the standard deviation of CellLoad$_{Macro}$ of a macro cell within the optimization server.
The optimization server determines a power control direction of a macro cell according to Equation (5) below.

Equation (5)

If LoadDegree >= 1, decrease power of macro cell j (PowerDirection$_j$ = down)

If LoadDegree =< -1, increase power of macro cell j (PowerDirection$_j$ = up)

If the two conditions are not satisfied, there is no limit on a change in power of a macro cell (PowerDirection$_j$ = not limited)
If the LoadDegree is larger than 1, a load of the macro cell is high and thus transmission power is decreased, and if the LoadDegree is smaller than -1, a load of the macro cell is low and thus transmission power is increased to make the load larger.
Further, the optimization server determines a power control direction of a pico cell within the optimization server. Transmission power of the pico cell is configured to have no power change regardless of a load state of the pico. That is, PowerDirection$_j$ = not limited.

4. Determine transmission power for compulsory load balancing

The optimization server determines transmission power (LoadBalP) for compulsory load balancing according to the power control direction of the cell determined in the above step. Compulsory loading balancing transmission power is transmission power for increasing the number of UEs serviced by a cell corresponding to power direction = up and decreasing the number of UEs serviced by a cell corresponding to power direction = down through a minimum power change. However, when the compulsory loading balancing transmission power is calculated, a cell increasing power is preferentially considered.

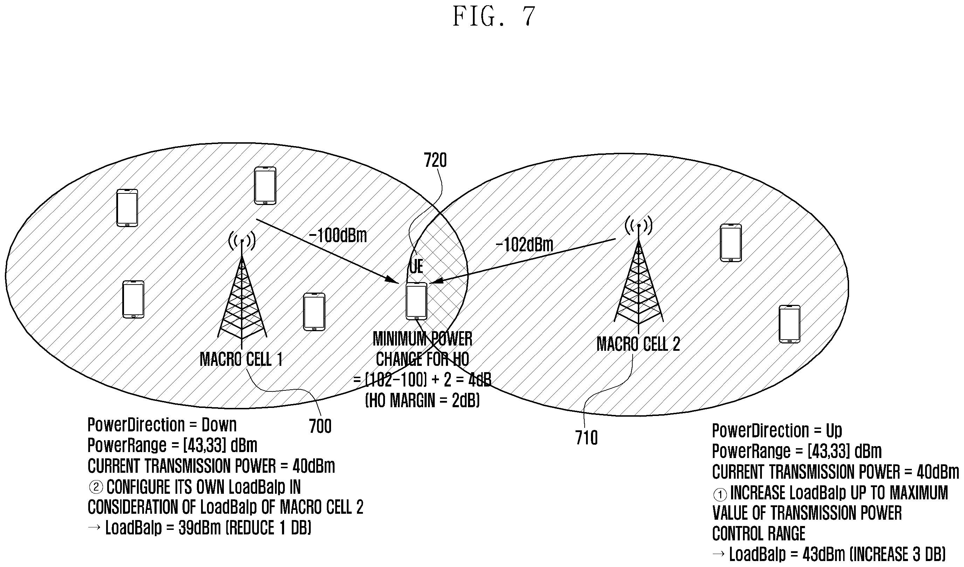

FIG. 7 illustrates a detailed example of determining transmission power for compulsory load balancing.

Referring to FIG. 7, macro cell #1 700 and macro cell #2 710 exist within a network. At this time, a power control direction of macro cell #1 having large load is determined as a down direction, a power control direction of macro cell #2 having small load is determined as up direction, a transmission power control range of both the macro cells is 33 to 43 dBm, and the optimization server determines transmission power for compulsory load balancing as follows when the current transmission power of both macro cells 1 and 2 is 40 dBm.

The optimization server determines a minimum power change (including HO margin) for handover of a UE 720 located at an edge of macro cell #1 and macro cell #2 from macro cell #1 to macro cell #2. For the HO margin, the PCell UE may use a PCell change condition (for example, event A3 condition) and the SCell UE may use an SCell change condition (for example, event A6 condition).

When an intensity of a signal for the UE of macro cell #1 is -100 dBm and an intensity of a signal for the UE of macro cell #2 is -102 dBm and thus the HO margin is 2 dB, if the minimum power change is determined as (-100 + 102) + 2 = 4 dB, the optimization server preferentially considers macro cell #2 increasing power. The optimization server configures compulsory load balancing power LoadBalP as a maximum value (that is, 43 dBm) of the transmission power control range of macro cell #2. At this time, the compulsory load balancing power increases by 3 dBm compared to the current transmission power of macro cell #2. LoadBalP of macro cell #1 is determined as 39 dBm by decreasing the current transmission power by 1 dB such that LoadBalP of macro cell #1 has a difference of 4 dB from macro cell #2 in consideration of the power change of macro cell #2.

5. Determine transmission power for improving load balancing.

The optimization server determines transmission power applied to each cell through the transmission power determination process for improving load balancing described below.

First, the optimization server configures transmission power control ranges of all cells according to Equation (6) below.

Equation (6)

LoadBalP (compulsory load balancing transmission power) > transmission power control range of cell CurrP (current transmission power): LoadBalP to maximum transmission power

LoadBalP < transmission power control range of cell CurrP = minimum transmission power to LoadBalP

LoadBalP == transmission power control range of cell CurrP = minimum transmission power to maximum transmission power

Referring to FIG. 7, in the case of macro cell #2 710, LoadBalP is 43 dBm and current transmission power is 40 dBm, and thus the transmission power control range of macro cell #2 is 43 dBm which corresponds to LoadBalP and the maximum transmission power value. In the case of macro cell #1 700, LoadBalP is 39 dBm and current transmission power is 40 dBm, and thus the transmission power control range is from 33 dBm (minimum transmission power) to 39 dBm.

Secondly, the optimization server selects a cell and randomly selects transmission power (P) within the transmission power control range of the selected cell.

Thereafter, thirdly, the optimization server determines a primary cell ($PCell_P$) of the UE at the selected transmission power (P). The following information is used during the $PCell_P$ determination process.

- Primary cell ($PCell_{CurrP}$) of the UE at current transmission power (CurrP)
- PCell change condition
- Channel state information

At this time, when the selected transmission power (P) is applied, if predicted reception power of a BestCell which is a cell having the largest predicted reception power compared to predicted reception power of the $PCell_{CurrP}$

(predicted reception power may be understood as the product of a link gain of a radio channel and transmission power and refers to power of a signal which the UE receives) satisfies the PCell change condition, the optimization server determines PCell$_P$ as the BestCell. Otherwise (when the PCell change condition is not satisfied), the optimization server determines the PCell$_P$ as the PCell$_{CurrP}$. At this time, the PCell change condition may be, for example, a PCell handover condition, and Event A3 may be applied.

Fourthly, the optimization server determines a secondary cell of the UE at the selected transmission power (P) (SCell$_P$). The following information is used during the SCell$_P$ determination process.

- PCell$_P$ of the UE, that is, a secondary cell (SCell$_{CurrP}$) of the UE at current transmission power (CurrP)
- Collocated cell of PCell$_P$
- SCell addition condition of PCell$_P$
- SCell release condition of PCell$_P$
- SCell change condition of PCell$_P$

The optimization server determines the SCell$_P$ of the UE on the basis of the information through the following method. The optimization server configures TempSCell$_P$ as the collocated cell of PCell$_P$ or the SCell$_{CurrP}$ and configures the BestCell as a cell having maximum predicted reception power at the selected transmission power (P). When predicted reception power of BestCell is larger than predicted reception power of the configured TempSCell$_P$ by a threshold value or more (the threshold value is based on the SCell change condition, for example, Event A6), TempSCell$_P$ is changed to and configured as BestCell. Otherwise, TempSCell$_P$ is maintained as the collocated cell of the originally configured PCell$_P$ or the SCell$_{CurrP}$.

The optimization server processes SCell release/addition/activation/deactivation as follows after the TempSCell$_P$ is configured. If predicted reception power of the TempSCell$_P$ or a predicted SINR is equal to or smaller than a threshold value (the threshold value may be based on the SCell release condition, for example, Event A2 condition), the optimization server configures the TempSCell$_P$ as NULL. Configuration of NULL means that the TempSCell$_P$ is not selected. This is because a channel state of the TempSCell$_P$ is not good enough. When the TempSCell$_P$ is NULL and there is a cell having predicted reception power or predicted SINR that is larger than or equal to a specific threshold value (the threshold value may be based on the SCell addition condition, for example, Event A4 condition), the cell is a cell having a good channel state and thus is configured as the TempSCell$_P$.

When TempSCell$_P$ is not NULL but an amount of the use of the PRB by the UE is equal to or smaller than a specific threshold value (referred to as the SCell activation condition), the optimization server configures the TempSCell$_P$ as NULL. When the TempSCell$_P$ is not NULL and a predicted channel quality (for example, expressed as the product of a predicted channel quality indicator (CQI) and a predicted rank indicator (RI)) of the UE is equal to or smaller than a threshold value (referred to as the SCell deactivation condition), the TempSCell$_P$ is configured as NULL. This is because allocation of more resources to the UE is not needed, and activation of the SCell is not needed if a channel quality of the TempSCell$_P$ is not good and thus a service cannot be efficiently provided although the TempSCell$_P$ is activated as the SCell and the service is provided to the UE.

Thereafter, the optimization server configures the SCell$_P$ as the TempSCell$_P$. At this time, the configuration of the TempSCell$_P$ as NULL and the configuration of the SCell$_P$ as NULL mean that the SCell is not selected.

Fifthly, the optimization server calculates an objective at the selected transmission power (P).

When a balancing mode is the balancing mode of the number of UEs, the optimization server calculates SumOfLogUETput$_{Full,P}$ as a target value of the control of transmission power. UETput$_{Full,P}$ is UE throughput predicted when the selected transmission power (P) is applied in a full-loading environment and corresponds to a sum of predicted through put of the PCell$_P$ and the SCell$_P$ of the UE. The target value SumOfLogUETput$_{Full,P}$ is a sum of Log(UETput$_{Full,P}$) for all UEs managed by the optimization server when the selected transmission power (P) is applied in the full-loading environment.

UETput$_{Full,P}$ is calculated according to Equation (7) below.

Equation (7)

$$UETput_{Full,P,m} = \sum_{j_{P,m}} \left( \sum_{j'_{P,m}} \frac{1}{NumUE_{j'_{P,m}}} \right) * \left( \frac{Capacity_{Full,P,j_{P,m},m}}{\sum_{j'_m} Capacity_{Full,P,j'_{P,m},m}} \right) * Capacity_{Full,P,j_{P,m},m}$$

In Equation (7), $j_{P,m}$ denotes a serving cell index of the UE m at transmission power (P) (cell indexes of the PCell$_P$ and the SCell$_P$ of the UE m), *Capacity* $_{Full,P,jP,m,m}$ denotes predicted capacity of the UE m for the cell $j_{P,m}$ when transmission power (P) is applied in the full-loading environment, and *NumUE*$_{jP,m,m}$ denotes the number of UEs serviced by the cell $j_{P,m}$ at transmission power (P).

When the balancing mode is a PRB balancing mode, the optimization server calculates SumOfLogTotalUEPRBusageRatio$_P$ and SumOfLogUETput$_{Partial,P}$ as target values of the control of power.

SumOfLogTotalIUEPRBusageRatio$_P$ is sum of Log (TotalEstimatedUEPRBusageRatio$_P$) for all UEs managed by the server at the selected transmission power (P) and is calculated according to Equation (8) below.

Equation (8)

$$SumofLogTotalUEPRBusageRatio_p = \sum_m \log_{10}(TotalEstimatedUEPRBusageRatio_{P,m})$$

At this time, TotalEstimatedUEPRBusageRatio$_{P,m}$ which is a predicted total UE PRB usage ratio of the UE is calculated as shown in Equation (9) below.

Equation (9)

$$TotalEstimatedUEPRBusageRatio_{P,m} = \sum_{j_{P,m}} EstimatedUEPRBusageRatio_{P,j_{P,m},m}$$

According to Equation (9) above, it is noted that TotalEstimatedUEPRBusageRatio$_{P,m}$ is a sum of *EstimatedUEPRBusageRatio* $_{P,jP,m,m}$ which is the predicted UE PRB usage ratio of each cell for the UE m. *EstimatedUEPRBusageRatio* $_{P,jP,m,m}$ is calculated differently in the case of a full buffer UE and the case of a non-full buffer UE in a partial loading environment.

The predicted PRB usage ratio of the full buffer UE for the serving cell is calculated as shown in Equation (10) below.

Equation (10)

$$EstimatedUEPRBusageRatio_{P,j_{P,m},m} = AvailablePRBusageRatioForFullBufferUE_{P,j_{P,m}}/N_{FullBufferUE,P,j_{P,m}}$$

In Equation (10), *AvailablePRBusageRatioForFullBufferUE*$_{P,jP,m}$ is defined as 1-"sum of *EstimatedUEPRBusageRatio*$_{P,jP,m,m}$ of UEs which are not the full buffer UE" for the cell $j_{P,m}$ when the transmission power (P) is applied. Further, $N_{FullBufferUE,P,jP,m}$ is the number of full buffer UEs for the cell $j_{P,m}$ when the transmission power (P) is applied.

Hereinafter, in the case of the UE which is not the full buffer UE, a method of calculating *Estimate dUEPRBusageRatio* $_{P,jP,m,m}$ which is the predicted PRB UE usage ratio in the cell $j_{P,m}$ in a partial loading environment for the UE m will be described.

A predicted data size DataSize$_m$ of the UE m in the partial loading environment is a predicted amount of data which the UE m can receive from the PCell$_{CurrP}$ and the SCell$_{CurrP}$. DataSize$_m$ is calculated according to Equation (11) below.

Equation (11)

$$DataSize_m = \left( \sum_{j_{CurrP,m}} UEPRBusageRatio_{CurrP,j_{CurrP,m},m} \right) * \left( \sum_{j_{CurrP,m}} Capacity^2_{Partial,CurrP,j_{CurrP,m},m} / \sum_{j_m=0} Capacity_{Partial,CurrP,j_{CurrP,m},m} \right)$$

In Equation (11), $jCurr_{P,m}$ denotes a serving cell index of the UE m (cell indexes of the $PCell_{CurrP}$ and the $SCell_{CurrP}$ of the UE m) at current transmission power (CurrP), and $UEPRBusageRatio_{CurrP,jCurrP,m,m}$ denotes a usage ratio of PRBs which a cell $j_{CurrP,m}$ allocates to the UE m at the current transmission power (CurrP), which corresponds to loading information which the optimization server receives from the Cell $j_{CurrP,m}$. $Capacity_{partial,CurrP,jcurrP,m,m}$ denotes predicted capacity of the UE m for the cell $j_{CurrP,m}$ at the current transmission power (CurrP) in the partial loading environment. $DataSize_m$ in Equation (11) is used to calculate $TempEstimatedUEPRBusageRatio_{P,jP,m,m}$

$TempEstimatedUEPRBusageRatio_{P,jP,m,m}$ is a temporary predicted UE PRB usage ratio of the UE m for the cell $j_{P,m}$ when the current transmission power (P) is applied in the partial loading environment, and the optimization server calculates $TempEstimatedUEPRBusageRatio_{P,jP,m,m}$ according to Equation (12) below.

Equation (12)

$$TempEstimatedUEPRBus\,ageRatio_{P,j_{P,m},m} = DataSize_m * \frac{Capacity_{Partial,P,j_{P,m},m}}{\sum_{j'_{P,m}} Capacity^2_{Partial,P,j'_{P,m},m}}$$

If a sum of the temporary predicted UE PRB usage ratios of UEs which are not the full buffer UE for the serving cell calculated according to Equation (12) above (more specifically, a sum of PRB usage ratios of UEs which are not the full buffer UE within one serving cell) is equal to or smaller than 1, the predicted UE PRB usage ratios of the UEs which are not the full buffer UE are calculated as shown in Equation (13) below.

Equation (13)

$$EstimatedUEPRBusageRatio_{P,j_{P,m},m} = TempEstimatedUEPRBusageRatio_{P,j_{P,m},m}$$

The sum of PRB usage ratios corresponding to 1 means that PRBs are affordably used, the temporary predicted PRB usage ratio may be determined as the predicted UE PRB usage ratio of the UE which is not the full buffer UE.

If the sum of temporary predicted UE PRB usage ratios of the UEs which are not the full buffer UE for the serving cell is larger than or equal to 1 (that is, if a PRB usage ratio larger than or equal to 1 is required to transmit a predicted amount of data), the predicted UE PRB usage ratio $EstimatedUEPRBusageRatio_{P,jP,m,m}$ of the UE which is not the full buffer UE is calculated as shown in Equation (14) below.

Equation (14)

If

$$TempEstimatedUEPRBusageRatio_{P,j_{P,m},m} < 1/N_{UE,P,j_{P,m}}$$

then $EstimatedUEPRBusageRatio_{P,jP,m,m} = TempEstimatedUEPRBusageRatio_{P,jP,m,m}$

Equation (14) above means that, if it is assumed that the PRB usage ratio of the cell $j_P$, m is 1, the temporary predicted PRB usage ratio may be determined as the predicted UE PRB usage ratio of the UE which is not the full buffer UE when an average PRB usage ratio of the UEs serviced by the cell $j_{P,m}$ is smaller than the calculated temporary predicted PRB usage ratio, that is, Equation (14) means to secure PRBs which can be originally allocated to the UE m.

Otherwise, that is, if $TempEstimatedUEPRBusageRatio_{P,jP,m,m} \geq 1/N_{UE,P,jP,m}$, the predicted UE PRB usage ratio $EstimatedUEPRBusageRatio_{Pj,P,m,m}$ of the UE which is not the full buffer UE is calculated according to Equation (15) below.

Equation (15)

$$\text{If } TempEstimatedUEPRBusageRatio_{P,j_{P,m},m} < AvailablePRBusageRatioForWorseUE_{P,j_{P,m}} / N_{WorseUE,P,j_{P,m}}$$

$$EstimatedUEPRBusageRatio_{P,j_{P,m},m} = TempEstimatedUEPRBusageRatio_{P,j_{P,m},m} ,$$

Otherwise,

$$EstimatedUEPRBusageRatio_{P,j_{P,m},m} = AvailablePRBusageRatioForWorseUE_{P,j_{P,m}} / N_{WorseUE,P,j_{P,m}}$$

$AvailablePRBusageRatioForWorseUE_{P,jP,m,m}$ in Equation (15) above denotes 1-(sum of $EstimatedUEPRBusageRatio_{P,jP,m,m}$ of UEs of $TempEstimatedUEPRBusageRatio_{P,jP,m,m} < 1/N_{UE,P,jP,m}$) for the cell $j_{P,\,m}$ at the selected transmission power (P), and $N_{WorseUE,P,jP,m}$ denotes the number of UEs which are not the full buffer UE for the cell $j_{P,\,m}$ at the transmission power (P) but correspond to $TempEstimatedUEPRBusageRatio_{P,jP,m,m} \geq 1/N_{UE,P,jP,m}$. That is, $N_{WorseUE,P,jP,m}$ denotes the number of UEs to which more resources should be allocated since the UEs have a predicted PRB usage rate higher than an average UE PRB usage rate and transmit data using more resources due to a poor channel state, $AvailablePRBusageRatioForWorseUE_{P,jP,m,m}$ denotes the remaining resources after the UEs of $TempEstimatedUEPRBusageRatio_{P,jP,m,m} < 1/N_{UE,P,jP,m}$ use. Accordingly, $EstimatedUEPRBusageRatio_{P,jP,m,m}$ is determined as $TempEstimatedUEPRBusageRatio_{P,jP,m,m}$ if $AvailablePRBusageRatioForWorseUE_{P,jP,m,m} / N_{WorseUE,P,jP,m}$ which is the remaining resources/the number of UEs having a poor channel state is smaller than $TempEstimatedUEPRBusageRatio_{P,jP,m,m}$, and, otherwise, $EstimatedUEPRBusageRatio_{P,jP,m,m}$ is determined as $AvailablePRBusageRatioForWorseUE_{P,jP,m,m} / N_{WorseUE,P,jP,m}$ which is the remaining resources/the number of UEs having a poor channel state.

$UETput_{Partial,P}$ which is predicted UE throughput at the selected transmission power (P) in the partial loading environment is a sum of throughput predicted from the $PCell_P$ and the $SCell_P$ of the UE as shown in Equation (16) below.

Equation (16)

$$UETput_{Partial,P,m} = \sum_{j_{P,m}} EstimatedUEPRBusageRatio_{P,j_{P,m},m} * Capacity_{Partial,P,j_{P,m},m}$$

If the selected transmission power (P) is applied in the partial loading environment, $UETput_{Partial,P,m}$ is predicted UE throughput of the U m, $j_{P,\,m}$ is a serving cell index of the UE m (cell indexes of the $PCell_P$ and the $SCell_P$ of the UE m) at the transmission power (P), and $Capacity_{Partial,P,jP,m,m}$ is predicted capacity of the UE m for the cell $j_{P,m}$ at the selected transmission power (P) in the partial loading environment in Equation (16).

At this time, $SumOfLogUETput_{Partial,P}$ is a sum of Log (predicted UE throughput) for all UEs managed by the server when the transmission power (P) is applied in the partial loading environment and is expressed as shown in Equation (17) below.

Equation (17)

$$SumofLogUETput_{Partial,P} = \sum_{m} \log_{10}(UETput_{Partial,P,m})$$

The optimization server determines transmission power for optimizing a target value according to each balancing mode while repeating the first to fifth processes.

If the balancing mode is the balancing mode of the number of UEs, transmission power for maximizing $SumOfLogUETput_{Full,P}$ is determined. However, when at least one of the following constraints is satisfied at the selected transmission power (P), the transmission power (P) is extracted from candidate transmission power values for optimizing the target value.

First, there is a constraint related to load balancing.

Equation (18)

$$VarOfNumUE_{Macro,CurrP} =< VarOfNumUE_{Macro,P}$$

In Equation (18) above, $VarOfNumUE_{Macro,P}$ denotes variance of the predicted number of UEs of all macro cells at transmission power (P). This means that the load balancing of the number of UEs should not be worse when the selected transmission power is applied compared to application of the current transmission power.

Equation (19)

$$VarOfNumUE_{Pico,CurrP,k} =< VarOfNumUE_{Pico,P,k}$$

Equation (19) above is applied only to the case in which a selected cell k is a pico cell. $VarOfNumUE_{Pico,P,k}$ denotes variance of the predicted number of UEs of a pico cell k and neighboring cells of the pico cell k at the selected transmission power (P).

Secondly, there is a constraint related to an SINR.

Equation (20)

$$SINR_{Full,CurrP,m} > SINR_{Full,P,m} \text{ and } SINR_{outage} > SINR_{Full,P,m}$$

In Equation (20) above, $SINR_{Full,P,m}$ denotes a predicted full loading SINR of the UE m at transmission power (P), and $SINR_{outage}$ denotes an SINR value that may generate a communication outage. That is, this is a condition meaning that the full loading SINR of the UE m should be larger than the case of current transmission power and should be larger than the SINR value that may generate the communication outage.

Thirdly, there is a constraint related to a UE located at an edge.

Equation (21)

$$NumEdgeUE_{CurrP} < NumEdgeUE_{P}$$

In Equation (21) above, $NumEdgeUE_{P}$ denotes the predicted number of PCell UEs existing in a handover (HO) region at transmission power (P). This aims at preventing the number of handovers from being excessively large.

Fourthly, there is a constraint related to UE throughput.

Equation (22)

$$EdgeUETput_{Full,CurrP} > EdgeUETput_{Full,P}$$

In Equation (22) above, $EdgeUETput_{Full,P}$ denotes predicted bottom 5% UE throughput at transmission power (P) in the full loading environment, which means that throughput of the UE located at the edge should be better than now.

Equation (23)

$$SumOfUETput_{Full,CurrP} > SumOfUETput_{Full,P}$$

In Equation (23), $SumOfLogUETput_{Partial,P}$ is a sum of predicted UE throughput at power (P) in the full loading environment, which means that a sum of throughput of all UEs should be better than now based on the assumption of the full loading environment.

If $SINR_{Full,CurrP},m > SINR_{Full,P,m}$ and $SINR_{outage} > SINR_{Full,P,m}$, a transmission power control range of the selected cell may be reduced as shown in Equation (24) below in order to prevent the communication outage.

Equation (24)

Transmission power control range of selected cell = (selected transmission power

(P) of selected cell + 1 [dB]) to maximum transmission power

In Equation (24), the minimum value of the transmission power control range is controlled to be currently selected transmission power + 1 dB in order to prevent the communication outage, and the optimization server controls again the transmission power within a new control range.

If the balancing mode is the PRB balancing mode, the optimization server determines transmission power for maximizing $SumOfLogUETput_{Partial,P}$ or minimizing $SumOfLogTotalUEPRBusageRatio_P$. However, if at least one of the following constraints is satisfied at the selected transmission power (P), the transmission power (P) is excluded from candidate transmission power values for optimizing the target value.

First, there is a constraint related to load balancing.

Equation (25)

$$VarOfCellPRBusageRatio_{Macro,CurrP} =< VarOfCellPRBusageRatio_{Macro,P}$$

In Equation (25), $VarOfCellPRBusageRatio_{Macro,P}$ denotes variance of predicted PRB usage ratios of all macro cells at transmission power (P), which means that load balancing of the PRB usage rate when the selected transmission power is applied should not be worse than the case in which the current transmission power is applied.

Equation (26)

$$VarOfCellPRBusageRatio_{Pico,CurrP,k} =< VarOfCellPRBusageRatio_{Pico,P,k}$$

Equation (26) above is applied only to the case in which a selected cell k is a pico cell. $VarOfCellPRBusageRatio_{Pico,P,k}$ denotes variance of predicted PRB usage ratios of the pico cell k and neighboring cells of the pico cell k at transmission power (P).

Secondly, there is a constraint related to an SINR.

Equation (27)

$$SINR_{Full,CurrP,m} > SINR_{Full,P,m} \text{ and } SINR_{outage} > SINR_{Full,P,m}$$

In Equation (27) above, $SINR_{Full,P,m}$ denotes a full loading SINR of the UE m at transmission power (P), and $SINR_{outage}$ denotes an SINR value that may generate a communication outage. This is a condition meaning that the full loading SINR of the UE m should be larger than the case of current transmission power and should be larger than the SINR value that may generate the communication outage.

Thirdly, there is a constraint related to UE throughput.

$$\text{Equation (28)}$$

$$SumOfLogUETput_{Partial,CurrP} >= SumOfLogUETput_{Partial,P}$$

In Equation (28) above, $SumOfLogUETput_{Partial,P}$ denotes a sum of Log (predicted UE throughput) at transmission power (P) in a partial loading environment, which means that the sum of UE throughput should not be smaller than the current state.

Fourthly, there is a constraint related to a UE located at an edge.

$$\text{Equation (29)}$$

$$NumEdgeUE_{CurrP} < NumEdgeUE_{P}$$

In Equation (29) above, $NumEdgeUE_{P}$ denotes the predicted number of PCell UEs existing in a handover (HO) region at transmission power (P) and aims at preventing the number of handovers from being large.

If $SINR_{Full,currP,m} > SINR_{Full,P,m}$ and $SINR_{outage} > SINR_{Full,P,m}$, the optimization server may reduce a transmission power control range of the selected cell as shown in Equation (30) below in order to prevent the communication outage.

$$\text{Equation (30)}$$

$$\text{Transmission power control range of selected cell = (selected power (P) of selected cell + 1 [dB]) to maximum transmission power}$$

In Equation (30), the minimum value of the transmission power control range is controlled to be (currently selected transmission power + 1 dB) in order to prevent the communication outage, and the optimization server controls again the transmission power within a new control range.

6. Determine power for improving interference control

Sixthly, the optimization server determines transmission power for maximizing the target value as follows through transmission power determination for controlling interference. However, the transmission power determination process for controlling interference is performed only when there is no transmission power value for improving the target value compared to current transmission power during the transmission power determination process for load balancing.

The transmission power determination process for controlling interference is almost similar to the transmission power control process for improving load balancing.

Firstly, the optimization server configures transmission power control ranges of all cells according to Equation (31) below.

Equation (31)

Power control range of cell: minimum transmission power to maximum transmission power

The transmission power control range is different from the case of transmission power determination for load balancing according to Equation (31) above.

Secondly, the optimization server selects a cell and randomly selects transmission power (P) within the transmission power control range of the selected cell.

Thereafter, thirdly, the optimization server determines a primary cell (PCellP) of the UE at the selected transmission power (P). The following information is used during the PCellP determination process.

- Primary cell of the UE at current transmission power (CurrP) (PCellCurrP)
- PCell change condition
- Channel state information

At this time, when the selected transmission power (P) is applied, if predicted reception power of a BestCell which is a cell having the largest predicted reception power compared to predicted reception power of a $PCell_{CurrP}$ (predicted reception power may be understood as the product of a link gain of a radio channel and transmission power and refers to power of a signal which the UE receives) satisfies the PCell change condition, the optimization server determines a $PCell_P$ as the BestCell. Otherwise (when the PCell change condition is not satisfied), the optimization server determines the $PCell_P$ as the $PCell_{CurrP}$. At this time, the PCell change condition may be, for example, a PCell handover condition, and Event A3 may be applied.

Fourthly, the optimization server determines a secondary cell ($SCell_P$) of the UE at the selected transmission power (P). The following information is used during the $SCell_P$ determination process.

- $PCell_P$ of the UE, that is, a secondary cell of the UE at current transmission power (CurrP) ($SCell_{CurrP}$)
- Collocated cell of $PCell_P$
- SCell addition condition of $PCell_P$
- SCell release condition of $PCell_P$
- SCell change condition of $PCell_P$

The optimization server determines the $SCell_P$ of the UE on the basis of the information through the following method. The optimization server configures a $TempSCell_P$ as the collocated cell of the $PCell_P$ or the $SCell_{CurrP}$ and configures a BestCell as a cell having maximum predicted reception power at the selected transmission power (P). When predicted reception power of the BestCell is larger than predicted reception power of the configured $TempSCell_P$ by a threshold value or more (the threshold value is based on the SCell change condition, for example, Event A6), the $TempSCell_P$ is changed to and configured as the BestCell. Otherwise, the $TempSCell_P$ is maintained as the collocated cell of the originally configured $PCell_P$ or the $SCell_{CurrP}$.

The optimization server processes SCell release/addition/activation/deactivation as follows after TempSCellP is configured. If predicted reception power of the $TempSCell_P$ or a predicted SINR is equal to or smaller than a threshold value (the threshold value is based on the SCell release condition, for example, Event A2 condition), the optimization server configures the $TempSCell_P$ as NULL. Configuration of NULL means that the $TempSCell_P$ is not selected. This is because a channel state of the $TempSCell_P$ is not good enough. If the $TempSCell_P$ is NULL and there is a cell having predicted reception power or predicted SINR that is larger than or equal to a specific threshold value (the threshold value may be based on the SCell addition condition, for example, Event A4 condition), the cell is a cell having a good channel state and thus is configured as the $TempSCell_P$.

If the $TempSCell_P$ is not NULL but an amount of the use of the PRB by the UE is equal to or smaller than a specific threshold value (referred to as the SCell activation condition), the optimization server configures the $TempSCell_P$ as NULL. If the $TempSCell_P$ is not NULL and a predicted channel quality (for example, expressed as the product of a predicted channel quality indicator (CQI) and a predicted rank indicator (RI)) of the UE is equal to or smaller than a threshold value (referred to as the SCell deactivation condition), the $TempSCell_P$ is configured as NULL. This is because allocation of more resources to the UE is not needed, and activation of the SCell is not needed if a channel quality of the $TempSCell_P$ is not good and thus a service cannot be efficiently provided although the $TempSCell_P$ is activated as the SCell and the service is provided to the UE.

Thereafter, the optimization server configures the $SCell_P$ as the $TempSCell_P$. At this time, the configuration of the TempSCell$_P$ as NULL and the configuration of the SCell$_P$ as NULL mean that the SCell is not selected.

Fifthly, the optimization server calculates an objective at the selected transmission power (P).

When a balancing mode is the balancing mode of the number of UEs, the optimization server calculates SumOfLogUETput$_{Full,P}$ as a target value of the control of transmission power. UETput$_{Full,P}$ is UE throughput predicted when the selected transmission power (P) is applied in a full-loading environment and corresponds to a sum of predicted through put of the PCell$_P$ and the SCell$_P$ of the UE. The target value SumOfLogUETput$_{Full,P}$ is a sum of Log(UETput$_{Full,P}$) for all UEs managed by the optimization server when the selected transmission power (P) is applied in the full-loading environment.

UETput$_{Full,P}$ is calculated according to Equation (32) below.

Equation (32)

$$UETput_{Full,P,m} = \sum_{j_{P,m}} \left( \sum_{j'_{P,m}} \frac{1}{NumUE_{j'_{P,m}}} \right) * \left( \frac{Capacity_{Full,P,j_{P,m},m}}{\sum_{j'_m} Capacity_{Full,P,j'_{P,m},m}} \right) * Capacity_{Full,P,j_{P,m},m}$$

In Equation (32), $j_{P,m}$ denotes a serving cell index of the UE m at transmission power (P) (cell indexes of the PCell$_P$ and the SCell$_P$ of the UE m), $Capacity_{Full,P,jp,m,m}$ denotes predicted capacity of the UE m for the cell $j_{P,m}$ when transmission power (P) is applied in the full-loading environment, and $NumUE_{jp,m,m}$ denotes the number of UEs serviced by the cell $j_{P,m}$ at transmission power (P).

If the balancing mode is a PRB balancing mode, the optimization server calculates SumOfLogTotalUEPRBusageRatio$_P$ and SumOfLogUETput$_{Partial,P}$ as target values of the control of power.

SumOfLogTotalIUEPRBusageRatio$_P$ is sum of Log (TotalEstimatedUEPRBusageRatio$_P$) for all UEs managed by the server at the selected transmission power (P) and is calculated according to Equation (33) below.

Equation (33)

$$SumofLogTotalUEPRBusageRatio_P = \underset{m}{Q} \log_{10}(TotalEstimatedUEPRBusageRatio_{P,m})$$

At this time, TotalEstimatedUEPRBusageRatio$_{P,m}$ which is a predicted total UE PRB usage ratio of the UE is calculated as shown in Equation (34) below.

Equation (34)

$$TotalEstimatedUEPRBusageRatio_{P,m} = \sum_{j_{P,m}} EstimatedUEPRBusageRatio_{P,j_{P,m},m}$$

According to Equation (34) above, it is noted that TotalEstimatedUEPRBusageRatio$_{P,m}$ is a sum of *EstimatedUEPRBusageRatio$_{P,jP,m,m}$* which is the predicted UE PRB usage ratio of each cell for the UE m. *EstimatedUEPRBusageRatio$_{P,jP,m,m}$* is calculated differently in the case of a full buffer UE and the case of a non-full buffer UE in a partially loading environment.

The predicted PRB usage ratio of the full buffer UE for the serving cell is calculated as shown in Equation (35) below.

## Equation (35)

$$EstimatedUEPRBusageRatio_{P,j_{P,m},m} = AvailablePRBusageRatioForFullBufferUE_{P,j_{P,m},m} / N_{FullBufferUE,P,j_{P,m}}$$

In Equation (35), $AvailablePRBusageRatioForFullBufferUE_{P,jP,m,m}$ is defined as 1-"sum of $EstimatedUEPRBusageRatio_{P,jP,m,m}$ of UEs which are not the full buffer UE" for the cell $j_{P,m}$ when the transmission power (P) is applied. Further, $N_{FullBufferUE,P,jP,m}$ is the number of full buffer UEs for the cell $j_{P,m}$ when the transmission power (P) is applied.

Hereinafter, in the case of the UE which is not the full buffer UE, a method of calculating $EstimatedUEPRBusageRatio_{P,jP,m,m}$ which is the predicted PRB UE usage ratio in the cell $j_{P,m}$ in a partial loading environment for the UE m will be described.

A predicted data size $DataSize_m$ of the UE m in the partial loading environment is a predicted amount of data which the UE m can receive from the $PCell_{CurrP}$ and the $SCell_{CurrP}$. $DataSize_m$ is calculated according to Equation (36) below.

## Equation (36)

$$DataSize_m = \left( \sum_{j_{CurrP,m}} UEPRBusageRatio_{CurrP,j_{CurrP,m},m} \right) * \left( \sum_{j_{CurrP,m}} Capacity^2_{Partial,CurrP,j_{CurrP,m},m} \Big/ \sum_{j_m=0} Capacity_{Partial,CurrP,j_{CurrP,m},m} \right)$$

In Equation (36), $jCurr_{P,m}$ denotes a serving cell index of the UE m (cell indexes of the $PCEll_{CurrP}$ and the $SCell_{CurrP}$ of the UE m) at current transmission power (CurrP), and $UEPRBusageRatio_{CurrP,jCurrP,m,m}$ denotes a usage ratio of PRBs which a cell $j_{CurrP,m}$ allocates to the UE m at the current transmission power (CurrP), which corresponds to loading information which the optimization server receives from the Cell $j_{CurrP,m}$. $Capacity_{Partial,currP,jCurrP,m,m}$ denotes predicted capacity of the UE m for the cell $j_{CurrP,m}$ at the current transmission power (CurrP) in the partial loading environment. $DataSize_m$ in Equation (36) is used to calculate $TempEstimatedUEPRBusageRatio_{P,jP,m,m}$.

$TempEstimatedUEPRBusageRatio_{P,jP,m,m}$ $TempEstimatedUEPRBusageRatio_{P,j'_{P,m},m}$ is a temporary predicted UE PRB usage ratio of the UE m for the cell $j_{P,m}$ when the current transmission power (P) is applied in the partial loading environment, and the optimization server calculates $TempEstimatedUEPRBusageRatio_{P,jP,m,m}$ according to Equation (37) below.

## Equation (37)

$$TempEstimatedUEPRBusageRatio_{P,j_{P,m},m} = DataSize_m * \frac{Capacity_{Partial,P,j_{P,m},m}}{\sum_{j'_{P,m}} Capacity^2_{Partial,P,j'_{P,m},m}}$$

If a sum of the temporary predicted UE PRB usage ratios of UEs which are not the full buffer UE for the serving cell calculated according to Equation (37) above (more specifically, a sum of PRB usage ratios of UEs which are not the full buffer UE within one serving cell) is equal to or smaller than 1, the predicted UE PRB usage ratio $EstimatedUEPRBusageRatio_{P,jP,m,m}$ of the UE which is not the full buffer UE is calculated as shown in Equation (38) below.

## Equation (38)

$$EstimatedUEPRBusageRatio_{P,j_{P,m},m} = TempEstimatedUEPRBusageRatio_{P,j_{P,m},m}$$

The sum of PRB usage ratios corresponding to 1 means that PRBs are affordably used, so that the temporary predicted PRB usage rate may be determined as the predicted UE PRB usage ratio of the UE which is not the full buffer UE.

If a sum of temporary predicted UE PRB usage ratios of UEs which are not the full buffer UE for the serving cell is larger than or equal to 1 (that is, if a PRB usage ratio larger than or equal to 1 is required to transmit a predicted amount of data), the predicted UE PRB usage ratio $EstimatedUEPRBusageRatio_{P,jP,m,m}$ of the UE which is not the full buffer UE is calculated as shown in Equation (39) below.

Equation (39)

If

$$TempEstimatedUEPRBusageRatio_{P,j_{P,m},m} < 1/N_{UE,P,j_{P,m}},$$

then

$$EstimatedUEPRBusageRatio_{P,j_{P,m},m} = TempEstimatedUEPRBusageRatio_{P,j_{P,m},m}$$

Equation (39) above means that, if it is assumed that the PRB usage ratio of the cell $j_P$, m is 1, the temporary predicted PRB usage ratio may be determined as the predicted UE PRB usage ratio of the UE which is not the full buffer UE when an average PRB usage ratio of the UEs serviced by the cell $j_P$, m is smaller than the calculated temporary predicted PRB usage ratio, that is, Equation (39) means to secure PRBs which can be originally allocated to the UE m.

Otherwise, that is, if $TempEstimatedUEPRBusageRatio_{P,jP,m,m} \geq 1/N_{UE,PjP,m}$, the predicted UE PRB usage rate $EstimatedUEPRBusageRatio_{P,jP,m,m}$ of the UE which is not the full buffer UE is calculated according to Equation (40) below.

Equation (40)

If

$$TempEstimatedUEPRBusageRatio_{P,j_{P,m},m} < AvailablePRBusageRatioForWorseUE_{P,j_{P,m}} / N_{WorseUE,P,j_{P,m}}$$

$$EstimatedUEPRBusageRatio_{P,j_{P,m},m} = TempEstimatedUEPRBusageRatio_{P,j_{P,m},m},$$

Otherwise,

$$EstimatedUEPRBusageRatio_{P,j_{P,m},m} = AvailablePRBusageRatioForWorseUE_{P,j_{P,m}} / N_{WorseUE,P,j_{P,m}}$$

$AvailablePRBusageRatioForWorseUE_{P,jP,m}$ in Equation (40) above denotes 1-(sum of $EstimatedUEPRBusageRatio_{P,jP,m,m}$ of UEs of $TempEstimatedUEPRBusageRatio_{P,jP,m,m} < 1/N_{UE,P,jP,m}$) for the cell $j_{P,m}$ at the selected transmission power (P), and $N_{WorseUE,P,jP,m}$ denotes the number of UEs which are not the full buffer UE for the cell $j_{P,m}$ at the transmission power (P) but correspond to $TempEstimatedUEPRBusageRatio_{P,jP,m,m} \geq 1/N_{UE,P,jP,m}$. That is, $N_{WorseUE,P,\overline{jP,m}}$ denotes the number of UEs to which more resources should be allocated since the UEs have a predicted PRB usage rate higher than an average UE PRB usage rate and transmit data using more resources due to a poor channel state, $AvailablePRBusageRatioForWorseUE_{P,jP,m,m}$ denotes the remaining resources after the UEs of $TempEstimatedUEPRBusageRatio_{P,jP,m,m} < 1/N_{UE,P,jP,m}$ use. Accordingly, $EstimatedUEPRBusageRatio_{P,jP,m,m}$ is determined as $TempEstimatedUEPRBusageRatio_{P,jP,m,m}$ if $AvailablePRBusageRatioForWorseUE_{P,jP,m,m}$ / $N_{WorseUE,P,jP,m}$ which is the remaining resources/the number of UEs having a poor channel state is smaller than

*TempEstimatedUEPRBusageRatio$_{P,jP,m,m}$*, and, otherwise, *EstimatedUEPRBusageRatio$_{P,jP,m,m}$* is determined as *AvallablePRBusageRatioForWorseUE$_{P,jP,m,m}$* / $N_{WorseUE,P,jP,m}$ which is the remaining resources/the number of UEs having a poor channel state.

UETput$_{Partial,P}$ which is predicted UE throughput at the selected transmission power (P) in the partial loading environment is a sum of throughput predicted from the PCell$_P$ and the SCell$_P$ of the UE as shown in Equation (41) below.

Equation (41)

$$UETput_{Partial,P,m} = \sum_{j_{P,m}} EstimatedUEPRBusageRatio_{P,j_{P,m},m} * Capacity_{Partial,P,j_{P,m},m}$$

If the selected transmission power (P) is applied in the partial loading environment, UETput$_{Partial,P,m}$ is predicted UE throughput of the U m, $j_{P,m}$ is a serving cell index of the UE m (cell indexes of the PCell$_P$ and the SCell$_P$ of the UE m) at the transmission power (P), and *Capacity$_{Partial,P,jP,m,m}$* is predicted capacity of the UE m for the cell $j_{P,m}$ at the selected transmission power (P) in the partial loading environment.

At this time, SumOfLogUETput$_{Partial,P}$ is a sum of Log (predicted UE throughput) for all UEs managed by the server when the transmission power (P) is applied in the partial loading environment and is expressed as shown in Equation (42) below.

Equation (42)

$$SumoflogUETput_{Partial,P} = \underset{m}{Q} \log_{10}(UETput_{Partial,P,m})$$

The optimization server determines transmission power for optimizing a target value according to each balancing mode while repeating the first to fifth processes.

If the balancing mode is the balancing mode of the number of UEs, transmission power for maximizing SumOfLogUETput$_{Full,P}$ is determined. However, when at least one of the following constraints is satisfied at the selected transmission power (P), the transmission power (P) is extracted from candidate transmission power values for optimizing the target value.

First, there is a constraint related to load balancing.

Equation (43)

$$VarOfNumUE_{Macro,CurrP} < VarOfNumUE_{Macro,P}$$

In Equation (43) above, VarOfNumUE$_{Macro,P}$ denotes variance of the predicted number of UEs of all macro cells at transmission power (P). At this time, a difference between Equation (18) and Equation (43) for determining transmission power for load balancing is that Equation (43) does not include the sing of equality. This means that the load balancing of the number of UEs should become better for interference control.

Equation (44)

$$VarOfNumUE_{Pico,CurrP,k} =< VarOfNumUE_{Pico,P,k}$$

Equation (44) above is applied only to the case in which a selected cell k is a pico cell. $VarOfNumUE_{Pico,P,k}$ denotes variance of the predicted number of UEs of a pico cell k and neighboring cells of the pico cell k at the selected transmission power (P). At this time, a difference between Equation (19) and Equation (44) for determining transmission power for loading balancing is that Equation (44) does not include the sign of equality. This means that the load balancing of the number of UEs should become better for interference control.

Secondly, there is a constraint related to an SINR.

Equation (45)

$$SINR_{Full,CurrP,m} > SINR_{Full,P},m \text{ and } SINR_{outage} > SINR_{Full,P,m}$$

In Equation (45) above, $SINR_{Full,P,m}$ denotes a predicted full loading SINR of the UE m at transmission power (P), and $SINR_{outage}$ denotes an SINR value that may generate a communication outage. That is, this means that the full loading SINR of the UE m should be larger than the case of current transmission power and should be larger than the SINR value that may generate the communication outage.

Thirdly, there is a constraint related to a UE located at an edge.

Equation (46)

$$NumEdgeUE_{CurrP} < NumEdgeUE_P$$

In Equation (46) above, $NumEdgeUE_P$ denotes the predicted number of PCell UEs existing in a handover (HO) region at transmission power (P). This aims at preventing the number of handovers from being excessively large.

Fourthly, there is a constraint related to UE throughput.

Equation (47)

$$EdgeUETput_{Full,CurrP} > EdgeUETput_{Full,P}$$

In Equation (47) above, $EdgeUETput_{Full,P}$ denotes predicted bottom 5% UE throughput at transmission power (P) in the full loading environment, which means that throughput of the UE located at the edge should become better than now.

Equation (48)

$$SumOfUETput_{Full,CurrP} > SumOfUETput_{Full,P}$$

In Equation (48), $SumOfLogUETput_{Partial,P}$ is a sum of predicted UE throughput at power (P) in the full loading environment, which means that a sum of throughput of all UEs should be better than now based on the assumption of the full loading environment.

If $SINR_{Full,CurrP,m} > SINR_{Full,P,m}$ and $SINR_{outage} > SINR_{Full,P,m}$, a transmission power control range of the selected cell may be reduced as shown in Equation (49) below in order to prevent the communication outage.

Equation (49)

Transmission power control range of selected cell = (selected transmission power

(P) of selected cell + 1 [dB]) to maximum transmission power

In Equation (49), the minimum value of the transmission power control range is controlled to be currently selected transmission power + 1 dB in order to prevent the communication outage, and the optimization server controls again the transmission power within a new control range.

If the balancing mode is the PRB balancing mode, the optimization server determines transmission power for maximizing $SumOfLogUETput_{Partial,P}$ or minimizing $SumOfLogTotalUEPRBusageRatio_P$. However, if at least one of the following constraints is satisfied at the selected transmission power (P), the transmission power (P) is excluded from candidate transmission power values for optimizing the target value.

First, there is a constraint related to load balancing.

Equation (50)

$$VarOfCellPRBusageRatio_{Macro,CurrP} =< VarOfCellPRBusageRatio_{Macro,P}$$

In Equation (50), $VarOfCellPRBusageRatio_{Macro,P}$ denotes variance of predicted PRB usage ratios of all macro cells at transmission power (P) and, at this time, a different between Equation (25) and Equation (50) for determining transmission power for load balancing is that Equation (50) does not the sign of equality. This means that load balancing of the PRB usage ratio should be better for interference control.

Equation (51)

$$VarOfCellPRBusageRatio_{Pico,CurrP,k} =< VarOfCellPRBusageRatio_{Pico,P,k}$$

Equation (51) above is applied only to the case in which a selected cell k is a pico cell. $VarOfCellPRBusageRatio_{Pico,P,k}$ denotes variance of predicted PRB usage ratios of the pico cell k and neighboring cells of the pico cell k at transmission power (P). At this time, a difference between Equation (26) and Equation (51) for determining transmission power for load balancing is that Equation (51) does not include the sing of equality. This means that load balancing of the PRB usage ratio should be better for interference control.

Secondly, there is a constraint related to an SINR.

Equation (52)

$$SINR_{Full,CurrP,m} > SINR_{Full,P,m} \text{ and } SINR_{outage} > SINR_{Full,P,m}$$

In Equation (52) above, $SINR_{Full,P,m}$ denotes a full loading SINR of the UE m at transmission power (P), and $SINR_{outage}$ denotes an SINR value that may generate a communication outage. This is a condition meaning that the full loading SINR of the UE m should be larger than the case of current transmission power and should be larger than the SINR value that may generate the communication outage.

Thirdly, there is a constraint related to UE throughput.

Equation (53)

$$\text{SumOfLogUETput}_{\text{Partial,CurrP}} \geq \text{SumOfLogUETput}_{\text{Partial,P}}$$

In Equation (53) above, $\text{SumOfLogUETput}_{\text{Partial,P}}$ denotes a sum of Log (predicted UE throughput) at transmission power (P) in a partial loading environment, which means that the sum of UE throughput should not be smaller than the current state.

Fourthly, there is a constraint related to a UE located at an edge.

Equation (54)

$$\text{NumEdgeUE}_{\text{CurrP}} < \text{NumEdgeUE}_{\text{P}}$$

In Equation (54) above, $\text{NumEdgeUE}_{\text{P}}$ denotes the predicted number of PCell UEs existing in a handover (HO) region at transmission power (P) and aims at preventing the number of handovers from being large.

If $\text{SINR}_{\text{Full,CurrP,m}} > \text{SINR}_{\text{Full,P,m}}$ and $\text{SINR}_{\text{outage}} > \text{SINR}_{\text{Full,P,m}}$, the optimization server may reduce a transmission power control range of the selected cell as shown in Equation (55) below in order to prevent the communication outage.

Equation (55)

Transmission power control range of selected cell = (selected power (P) of selected cell + 1 [dB]) to maximum transmission power

In Equation (55), the minimum value of the transmission power control range is controlled to be (currently selected transmission power + 1 dB) in order to prevent the communication outage, and the optimization server controls again the transmission power within a new control range.

Hereinafter, a process of monitoring a network quality will be described.

The base station transfers handover statistics of a cell and call drop statistics to the optimization server in every transmission power control period, and the optimization server manages the handover statistics of the cell, the call drop statistics, and history information of transmission power. However, the history information remains only for a recent specific time.

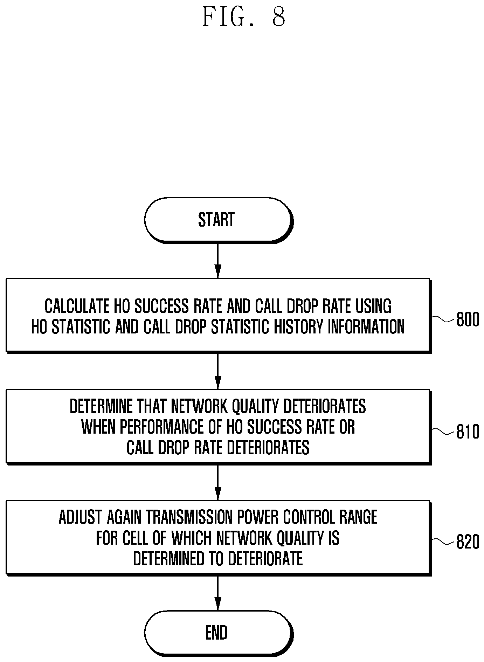

The optimization server updates a transmission power control range for each cell on the basis of network quality statistics and transmission power history information in every transmission power control period as illustrated in FIG. 8.

FIG. 8 illustrates a method by which the optimization server updates a transmission power control range by monitoring a network quality, and referring to FIG. 8, the optimization server calculates a handover success rate and a call drop rate on the basis of handover statistics and call drop statistic history information in step 800. Thereafter, the optimization server determines that the network quality deteriorates if performance of the handover success rate or the call drop rate deteriorates in step 810. The determination follows a reference of Equation (55) below.

Equation (55)

Handover success rate < KPI_HO_SUCCESS_RATE

Call drop rate > KPI_CALL_DROP_RATE

In Equation (55) above, KPI_HO_SUCCESS_RATE is a target value preset for the handover success rate, and KPI_CALL_DROP_RATE is a target value for the call drop rate.

Thereafter, the optimization server controls the transmission power control range for a cell of which a network quality is determined to deteriorate as shown in Equation (56) below in step 820.

Equation (56)

Transmission power control range = (minimum transmission power [dB] within history information + 1 [dB]) to maximum transmission power

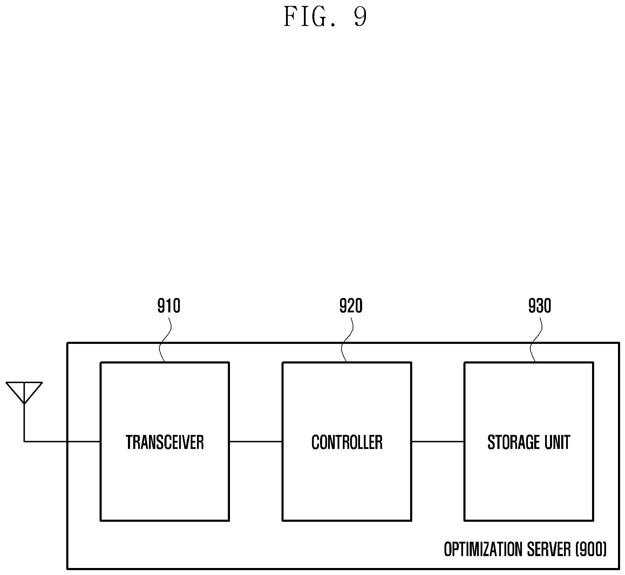

FIG. 9 is a block diagram illustrating an optimization server capable of performing the disclosure.

Referring to FIG. 9, an optimization server 900 may include a transceiver 910, a controller 920, and a storage unit 930. The transceiver may transmit and receive information to and from a system management server and a base station, and the storage unit may store information which the system management server and the base station transmit. The controller controls the transceiver and the storage unit. Further, the controller collects and transmits transmission power control-related information, determines transmission power to be applied to each cell, and monitors a network quality according to the disclosure.

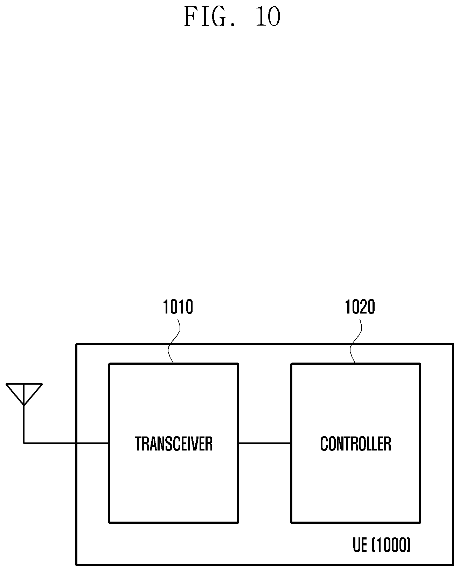

FIG. 10 is a block diagram illustrating a UE capable of performing the disclosure.

Referring to FIG. 10, a UE 1000 may include a transceiver 1010 and a controller 1020. The transceiver may transmit and receive a signal to and from a base station according to applied transmission power, and the controller may control the transceiver according to the disclosure.

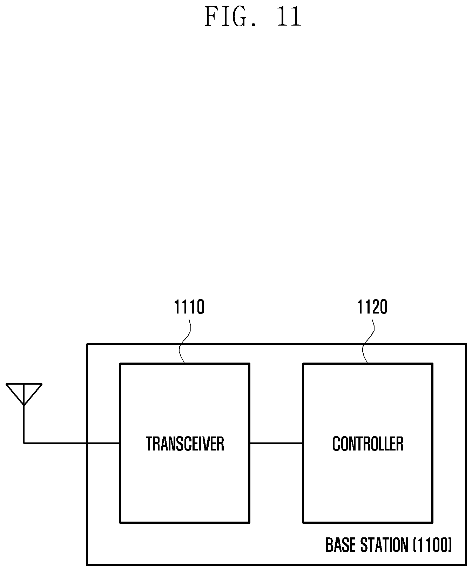

FIG. 11 is a block diagram illustrating a base station capable of performing the disclosure.

Referring to FIG. 11, a base station 1100 may include a transceiver 1110 and a controller 1120. The transceiver transmits and receives a signal to and from an optimization server and a UE, and the controller may control the transceiver according to the disclosure.

According to the above-described disclosure, it is possible to improve UE throughput through real-time transmission power control in consideration of a radio channel state for multiple carriers and multiple cells in a heterogeneous network, a loading state, and a CA operation without network quality deterioration in a CA environment.

**Claims**

1. A method of controlling transmission power of each cell by a server, the method comprising:

    receiving configuration information from a system management server;
    receiving channel state information and loading-related information from a base station controlling each cell;
    determining transmission power to be applied to each cell, based on the configuration information, the channel state information, and the loading-related information; and
    transmitting the determined transmission power information to the base station for controlling each cell.

2. The method of claim 1, wherein the controlling of the transmission power comprises determining a load balancing mode for determining the transmission power as one of a balancing mode of a number of UEs or a resource usage ratio balancing mode.

3. The method of claim 2, wherein the controlling of the transmission power further comprises determining a transmission power control direction of a macro cell among respective cells as a transmission power increase or a transmission power decrease.

4. The method of claim 3, wherein the controlling of the transmission power further comprises determining a transmission power value for load balancing, based on the transmission power control direction.

5. The method of claim 4, wherein the controlling of the transmission power further comprises determining a transmission power value of each cell for minimizing or maximizing a target value calculated based on assumption of a transmission power value, based on the load balancing mode and a transmission power value for the load balancing.

6. The method of claim 5, wherein the target value is a sum of throughput of all UEs when the load balancing mode is the number-of-UE balancing mode and the target value is a sum of throughput of all UEs or a sum of resource usage ratios of all UEs when the load balancing mode is the resource usage ratio balancing mode, and the transmission power value of each cell is a value for maximizing the sum of throughput of all UEs or minimizing the sum of resource usage ratios of all UEs.

7. The method of claim 1, further comprising:

receiving network quality-related statistic information from a base station for controlling each cell;
determining whether a network quality deteriorates based on the network quality-related statistic information; and
updating a transmission power control range, based on whether the network quality deteriorates.

8. A server for controlling transmission power of each cell, the server comprising:

a transceiver configured to transmit and receive a signal to and from a base station for controlling each cell and a system management server; and
a controller configured to receive configuration information from the system management server, receive channel state information and loading-related information from the base station for controlling each cell, determine transmission power to be applied to each cell, based on the configuration information, the channel state information, and the loading-related information, and transmit the determined transmission power information to the base station for controlling each cell

9. The server of claim 8, wherein the controller further performs control to determine a load balancing mode for determining the transmission power as one of a number-of-UE balancing mode or a resource usage ratio balancing mode.

10. The server of claim 9, wherein the controller further performs control to determine a transmission power control direction of a macro cell among respective cells as a transmission power increase or a transmission power decrease.

11. The server of claim 10, wherein the controller further performs control to determine a transmission power value for load balancing, based on the transmission power control direction.

12. The server of claim 11, wherein the controller further performs control to determine a transmission power value of each cell for minimizing or maximizing a target value calculated based on assumption of a transmission power value, based on the load balancing mode and a transmission power value for the load balancing.

13. The server of claim 12, wherein the target value is a sum of throughput of all UEs when the load balancing mode is the number-of-UE balancing mode and the target value is a sum of throughput of all UEs or a sum of resource usage ratios of all UEs when the load balancing mode is the resource usage ratio balancing mode, and the transmission power value of each cell is a value for maximizing the sum of throughput of all UEs or minimizing the sum of resource usage ratios of all UEs.

14. The server of claim 8, wherein the controller further performs control to receive network quality-related statistic information from a base station for controlling each cell, determine whether a network quality deteriorates based on the network quality-related statistic information, and update a transmission power control range, based on whether the network quality deteriorates.

FIG. 1

# FIG. 2

EP 3 606 189 A1

# FIG. 3

300

EMS

S340

SYSTEM INFORMATION, CELL TYPE,
AND CA CONFIGURATION INFORMATION

310

SON UNIT

S360

NOTIFY OF TRANSMISSION
POWER FOR EACH CARRIER

S350

CHANNEL STATE AND
LOADING INFORMATION, FOR EACH CARRIER,
AND PCELL/SCELL INFORMATION

MACRO 1

320

IMPROVE SINR

MACRO 2

330

EP 3 606 189 A1

FIG. 4

```
          ┌─────────────┐
          │    START    │
          └──────┬──────┘
                 │
                 ▼
   ┌──────────────────────────────────────┐
   │ COLLECT AND TRANSMIT RELEVANT INFORMATION │────400
   └──────────────────┬───────────────────┘
                      │
                      ▼
   ┌──────────────────────────────────────┐
   │ DETERMINE TRANSMISSION POWER OF EACH CELL │────410
   └──────────────────┬───────────────────┘
                      │
                      ▼
   ┌──────────────────────────────────────┐
   │         MONITOR NETWORK QUALITY          │────420
   └──────────────────┬───────────────────┘
                      │
                      ▼
          ┌─────────────┐
          │     END     │
          └─────────────┘
```

FIG. 5

# FIG. 6

START

DETERMINE FULL BUFFER UE ~600

DETERMINE LOAD BALANCING MODE ~610

DETERMINE POWER CONTROL DIRECTION ACCORDING TO LOADING STATE ~620

DETERMINE TRANSMISSION POWER FOR COMPULSORY LOAD BALANCING ~630

DETERMINE POWER FOR IMPROVING LOAD BALANCING ~640

DETERMINE POWER FOR CONTROLLING INTERFERENCE ~650

END

FIG. 7

EP 3 606 189 A1

-100dBm

-102dBm

720

UE

MINIMUM POWER
CHANGE FOR HO
= (102-100) + 2 = 4dB
(HO MARGIN = 2dB)

MACRO CELL 1

MACRO CELL 2

700

710

PowerDirection = Down
PowerRange = [43,33] dBm
CURRENT TRANSMISSION POWER = 40dBm
② CONFIGURE ITS OWN LoadBalp IN
CONSIDERATION OF LoadBalp OF MACRO CELL 2
→ LoadBalp = 39dBm (REDUCE 1 DB)

PowerDirection = Up
PowerRange = [43,33] dBm
CURRENT TRANSMISSION POWER = 40dBm
① INCREASE LoadBalp UP TO MAXIMUM
VALUE OF TRANSMISSION POWER
CONTROL RANGE
→ LoadBalp = 43dBm (INCREASE 3 DB)

# FIG. 8

START

CALCULATE HO SUCCESS RATE AND CALL DROP RATE USING
HO STATISTIC AND CALL DROP STATISTIC HISTORY INFORMATION — 800

DETERMINE THAT NETWORK QUALITY DETERIORATES
WHEN PERFORMANCE OF HO SUCCESS RATE OR
CALL DROP RATE DETERIORATES — 810

ADJUST AGAIN TRANSMISSION POWER CONTROL RANGE
FOR CELL OF WHICH NETWORK QUALITY IS
DETERMINED TO DETERIORATE — 820

END

FIG. 9

910    920    930

TRANSCEIVER    CONTROLLER    STORAGE UNIT

OPTIMIZATION SERVER (900)

FIG. 10

1010                          1020

TRANSCEIVER        CONTROLLER

UE (1000)

FIG. 11

1110            1120

| TRANSCEIVER | CONTROLLER |

BASE STATION (1100)

## INTERNATIONAL SEARCH REPORT

| International application No. |
| --- |
| **PCT/KR2018/005847** |

| A. | CLASSIFICATION OF SUBJECT MATTER |
| --- | --- |

*H04W 52/24(2009.01)i, H04W 52/34(2009.01)i, H04W 52/38(2009.01)i*

According to International Patent Classification (IPC) or to both national classification and IPC

| B. | FIELDS SEARCHED |
| --- | --- |

Minimum documentation searched (classification system followed by classification symbols)

H04W 52/24; H04W 24/02; H04B 7/26; H04W 72/12; H04W 52/34; H04W 52/26; H04W 52/50; H04W 52/42; H04W 52/38

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: server, system management server, base station, cell, configuration information, channel state information, loading related information, transmission power

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2015-154184 A (HITACHI LTD.) 24 August 2015<br>See paragraphs [0023], [0036], [0047]-[0049]; claims 1-4, 6, 12; and figures 6-8, 13. | 1-14 |
| A | KR 10-2010-0046755 A (SEOUL NATIONAL UNIVERSITY R&DB FOUNDATION) 07 May 2010<br>See paragraphs [0050]-[0065]; and figure 2. | 1-14 |
| A | KR 10-2015-0126137 A (SAMSUNG ELECTRONICS CO., LTD.) 11 November 2015<br>See paragraphs [0029]-[0032]; and figure 2. | 1-14 |
| A | KR 10-2014-0021645 A (P-WAVE HOLDINGS, LLC.) 20 February 2014<br>See paragraphs [0040]-[0047]; and figure 2. | 1-14 |
| A | KR 10-0559757 B1 (LUCENT TECHNOLOGIES INC.) 13 March 2006<br>See claims 1-3; and figure 1. | 1-14 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 AUGUST 2018 (24.08.2018) | **24 AUGUST 2018 (24.08.2018)** |

| Name and mailing address of the ISA/KR | Authorized officer |
| --- | --- |
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

INTERNATIONAL SEARCH REPORT
Information on patent family members

| | International application No. |
|---|---|
| | **PCT/KR2018/005847** |

| Patent document cited in search report | Publication date | Patent family member | Publication date |
|---|---|---|---|
| JP 2015-154184 A | 24/08/2015 | NONE | |
| KR 10-2010-0046755 A | 07/05/2010 | KR 10-1021660 B1 | 17/03/2011 |
| KR 10-2015-0126137 A | 11/11/2015 | CN 106465296 A | 22/02/2017 |
| | | EP 3138331 A1 | 08/03/2017 |
| | | EP 3138331 A4 | 22/11/2017 |
| | | JP 2017-519403 A | 13/07/2017 |
| | | US 2015-0319705 A1 | 05/11/2015 |
| | | WO 2015-167298 A1 | 05/11/2015 |
| KR 10-2014-0021645 A | 20/02/2014 | CN 103797717 A | 14/05/2014 |
| | | CN 103797717 B | 16/11/2016 |
| | | CN 106102155 A | 09/11/2016 |
| | | CN 106851805 A | 13/06/2017 |
| | | EP 2700174 A1 | 26/02/2014 |
| | | EP 2700174 A4 | 10/09/2014 |
| | | EP 2700174 B1 | 25/10/2017 |
| | | EP 3291450 A1 | 07/03/2018 |
| | | JP 2014-517557 A | 17/07/2014 |
| | | JP 2016-197888 A | 24/11/2016 |
| | | JP 5961682 B2 | 02/08/2016 |
| | | US 2011-0244914 A1 | 06/10/2011 |
| | | US 2012-0196611 A1 | 02/08/2012 |
| | | US 2015-0319711 A1 | 05/11/2015 |
| | | US 9020555 B2 | 28/04/2015 |
| | | US 9363761 B2 | 07/06/2016 |
| | | US 9693321 B2 | 27/06/2017 |
| | | WO 2012-138769 A1 | 11/10/2012 |
| KR 10-0559757 B1 | 13/03/2006 | AU 1999-50098 A1 | 06/04/2000 |
| | | BR 9904324 A | 05/09/2000 |
| | | CA 2280324 A1 | 30/03/2000 |
| | | CN 1250334 A | 12/04/2000 |
| | | DE 69909571 T2 | 24/06/2004 |
| | | EP 0991206 A2 | 05/04/2000 |
| | | EP 0991206 A3 | 06/02/2002 |
| | | EP 0991206 B1 | 16/07/2003 |
| | | JP 2000-115073 A | 21/04/2000 |
| | | JP 3538347 B2 | 14/06/2004 |
| | | US 6963750 B1 | 08/11/2005 |

Form PCT/ISA/210 (patent family annex) (January 2015)